# EUROPEAN PATENT SPECIFICATION

(11) **EP 2 621 395 B1**
(45) Date of publication and mention of the grant of the patent: **08.08.2018**
(21) Application number: 10771835.5
(22) Date of filing: 30.09.2010
(51) Int. Cl.: A61C 5/64

(54) **MIXING TIP FOR DENTAL MATERIALS**
MISCHSPITZE FÜR DENTALE MATERIALIEN
EMBOUT MÉLANGEUR POUR PRODUITS DENTAIRES

(30) Priority: 30.09.2009 US 586974
(43) Date of publication of application: 07.08.2013
(73) Proprietor: DENTSPLY SIRONA Inc., York, PA 17401-2991 (US)
(72) Inventor: PIERSON, Paul, R., Camden, DE 19934 (US)
(74) Representative: Hartz, Nikolai
(86) International application number: PCT/US2010/050839
(87) International publication number: WO 2012/044298

(56) References cited:
- US-A- 5 269 684
- US-A- 5 269 684
- US-A1- 2002 048 742
- US-A1- 2002 048 742
- US-A1- 2002 166 903
- US-A1- 2002 166 903
- US-A1- 2008 138 765
- US-A1- 2008 138 765

## Description

### TECHNICAL FIELD

The present invention is directed toward a mixing tip for dispensing materials. More particularly, the invention is a tip for mixing and dispensing materials.

### BACKGROUND OF THE INVENTION

Various types of material, such as medical or dental materials are often packaged in preloaded sealed cartridges or in preloaded syringes. For example, US Patent No. 5,707,234 discloses a cartridge for dispensing dental materials. The cartridge is preloaded and is inserted into an ejector device at the time of use. The ejector device is manipulated such that a piston is caused to enter the cartridge and the material in the cartridge is expelled through a nozzle. It also often the case that a non-mixing tip is placed onto a syringe containing a material to be dispensed.

Especially in the case of preloaded cartridges, it is often the case that a material must first be mixed with another material in order to form the final product. These materials are often preloaded into cartridges used for a single application of the material. These types of cartridges are sometimes referred to as being a "unit dose."

When a material is mixed at the time of use, especially in the case of a unit dose of dental material, it is often important to not only precisely mix the two components but to also place the components in the proper location in the oral cavity. Document US2008/0138765 discloses a tip for the dispensing of materials comprising a housing having first and second chambers contained therein. The chambers communicate with a mixing reservoir and a hollow barrel. Disposed within the hollow barrel is a static mixing device which is preferably a length of of twisted wire.

A need exists therefore for a mixing tip which will not only mix materials but will facilitate their exact application in for example, the oral cavity. The invention is defined in claim 1. Preferred embodiments are disclosed in the dependent claims.

### PREFERRED EMBODIMENTS FOR CARRYING OUT THE INVENTION

The present invention is directed to a mixing tip which can be alternatively preloaded or used with a loaded ejection device or syringe. More particularly, the mixing tip is used with a dual-component material which may be required to be mixed substantially immediately before application. While useful with any number of such materials, the present invention has particular application to dual-component dental materials.

The mixing device has a housing which is provided with first and second chambers which are in communication with each other. The chambers combine to form a sleeve which is a means to connect the mixing device to a preloaded cartridge.

According to one embodiment of the invention, the chambers are separated by a plenum and each has an input orifice respectively, and an output orifice respectively. The output orifices communicate with a mixing reservoir and a hollow dispensing barrel.

The mixing reservoir is in communication with the interior passage of a dispensing barrel. It will be appreciated therefore, that material dispensed into the mixing reservoir will be expressed through interior passage. The dispensing barrel is provided with an output orifice which may be closed with a suitable cap until removed.

Disposed within interior passage is a static mixing device. The static mixing device is a length of twisted wire. While the length of twisted wire is not necessarily critical to the practice of the present invention, it is preferred that the wire be approximately the same length as the barrel. According to the invention, the twisted wire traps a plurality of brush bristles within the twists thereof, providing an enhanced mixing capability to static mixing device and also if desired by the user, providing a convenient application brush in addition to or in place of brush later described. By "traps" it is understood to mean that the brush bristles are physically contacted between the opposing surfaces of the wire, said opposing surfaces being so positioned due to the twisted nature of wire. Preferably, that physical contact between the twists of wire and brush bristles physically restrains brush bristles.

In another preferred embodiment of the invention, static mixing element is provided at one end with a brush. It is to be appreciated that material flowing through the barrel will be caused to physically contact the brush. By manipulating the mixing tip, the brush can be used to facilitate precise application of the expressed material. The material from which the brush is fabricated is not critical to the practice of the present invention. The material should be substantially impervious to degradation caused by the material expressed through the mixing tip, and should not cause substantial discomfort or would be otherwise detrimental for the intended purpose. One preferred type of brush would be nylon bristles that are attached to the static mixing device in any conventional manner.

According to another embodiment of the invention, the barrel is made of a flexible, preferably plastic material that can be bent at any of a variety of angles in order to facilitate application of the expressed material

First and second chambers are preferably provided at an end distal to the static mixing device or at some other location therein, with a detent or snap bead and a flange which will mate to the device which is used to express material through the mixing tip. While this is one preferred method of mating and affixing to the expressing device, any other conventional such method is also within the scope of the present disclosure.

A mixing and dispensing syringe is shown by way of example in US Patent 4,776,704.

It is apparent therefore, that a mixing tip according to the present invention is an advantageous improvement over dispensing tips previously known, and otherwise provides an improvement in the art.

## Claims

1. A tip for the dispensing, mixing and application of a material having first and second components to be mixed prior to application comprising a housing, first and second chambers disposed within said housing and in communication, said chambers providing a means to attach said mixing tip to a preloaded cartridge fluidly communicating with a mixing reservoir, a dispensing barrel having a hollow interior also in fluid communication with said mixing reservoir and having an output orifice, a static mixing device disposed within said barrel, said static mixing device comprising a twisted wire component
**characterized in that** said twisted wire component has a plurality of brush bristles physically trapped within the twists thereof.

2. A tip as in claim 1 wherein static mixing device is also provided with a brush at least partially protruding from said barrel.

3. A tip as in claim 1 wherein said barrel and said enclosed static mixing device can be bent at an angle.

## Patentansprüche

1. Spitze zum Ausgeben, Mischen und Auftragen eines Materials mit ersten und zweiten Komponenten, die vor Auftragen zu vermischen sind, umfassend ein Gehäuse, erste und zweite Kammern, die innerhalb des Gehäuses und in Kommunikation angeordnet sind, wobei die Kammern ein Mittel zum Anbringen der Mischspitze an einer vorbeladenen Patrone bereitstellen, die mit einem Mischreservoir in Fluidverbindung steht, einen Ausgabezylinder mit einem hohlen Inneren, der ebenfalls mit dem Mischreservoir in Fluidverbindung steht und eine Ausgabeöffnung aufweist, eine statische Mischvorrichtung, die innerhalb des Zylinders angeordnet ist, wobei die statische Mischvorrichtung eine verdrillte Drahtkomponente aufweist, **dadurch gekennzeichnet, dass** die verdrillte Drahtkomponente eine Mehrzahl von Pinselborsten aufweist, die innerhalb deren Verdrehungen physisch eingefangen sind.

2. Spitze nach Anspruch 1, wobei die statische Mischvorrichtung auch mit einem Pinsel versehen ist, der vom Zylinder zumindest teilweise vorsteht.

3. Spitze nach Anspruch 1, wobei der Zylinder und die umschlossene statische Mischvorrichtung in einem Winkel gebogen werden können.

## Revendications

1. Embout pour la distribution, le mélange et l'application d'un matériau ayant des premier et deuxième composants devant être mélangés avant l'application comprenant un boîtier, des première et deuxième chambres disposées à l'intérieur dudit boîtier et en communication, lesdites chambres fournissant un moyen de fixer ledit embout de mélange à une cartouche préchargée communicant de façon fluide avec un réservoir de mélange, un barillet de distribution ayant un intérieur creux aussi en communication fluidique avec ledit réservoir de mélange et ayant un orifice de sortie, un dispositif de mélange statique disposé à l'intérieur dudit barillet, ledit dispositif de mélange statique comprenant un composant de fil torsadé **caractérisé en ce que** ledit composant de fil torsadé a une pluralité de poils de brosse retenus dans ses torsades.

2. Embout selon la revendication 1, dans lequel le dispositif de mélange statique est aussi muni d'une brosse faisant au moins partiellement saillie dudit barillet.

3. Embout selon la revendication 1, dans lequel ledit barillet et ledit dispositif de mélange statique peuvent être pliés en angle.
